Europäisches Patentamt

European Patent Office

Office européen des brevets

(11) Publication number: **0 293 754**
**A1**

# EUROPEAN PATENT APPLICATION

(21) Application number: **88108385.1**

(22) Date of filing: **26.05.88**

(51) Int. Cl.⁴: **C08J 5/24 , C08L 67/06**

(30) Priority: **02.06.87 NL 8701291**

(43) Date of publication of application:
**07.12.88 Bulletin 88/49**

(84) Designated Contracting States:
**AT BE CH DE ES FR GB GR IT LI NL SE**

(71) Applicant: **STAMICARBON B.V.**
**Mijnweg 1**
**NL-6167 AC Geleen(NL)**

(72) Inventor: **Kasper, Abel**
**De Waarden 331**
**NL-7206 GW Zutphen(NL)**

(54) **Laminate based on an unsaturated polyester.**

(57) The invention relates to a laminate based on a cured resin mixture of an unsaturated polyester and a monomer containing a vinyl group and reinforcing fibres in the form of a knitted fabric, characterized in that a resin mixture is applied, that in set condition and without reinforcement, has a tensile strength of 5-12 N/mm² at an elongation at break of 90-400%.

EP 0 293 754 A1

## LAMINATE BASED ON AN UNSATURATED POLYESTER

The invention relates to a laminate based on a cured mixture of an unsaturated polyester and a monomer containing a vinyl group and reinforcing fibres in the form of a knitted fibre fabric.

The invention also relates to an intermediate in sheet form for the production of a laminate.

Laminates based on mixtures consisting of an unsaturated polyester, a monomer containing a vinyl group and reinforcing fibres in the form of a knitted fibre fabric are known from US-A-4,005,234. The mechanical properties of normal polyester resins reinforced with knitted fabric approach those of the pure polyester resin and are characterized by an elongation at break of 2-5% at a tensile strength of 60-80 N/mm². However, these laminates are too brittle for applications requiring flexibility, for example in lining films for ground-water basins.

The aim of the invention is to provide laminates with substantially improved elongation at break without notable loss of tensile strength.

This is obtained according to the invention by applying in a laminate based on a cured resin mixture of an unsaturated polyester and a monomer containing a vinyl group, and reinforcing fibres in the form of a knitted fibre fabric, an unsaturated polyester resin, which, in set condition, without reinforcements, has a tensile strength of 5-12 N/mm² at an elongation at break of 90-400%.

From EP-A-31.977 it is known to produce laminates based on a resin which is flexible when set, but the elongation at break of these laminates produced with normal glass fibres is too low (up to 17%).

By combining a knitted reinforcing fabric with a polyester which is flexible, within the given range, when set, an optimum combination of tensile strength and elongation at break is obtained.

Preferably the resin mixture and the fibre reinforcement are chosen such that the laminate obtained has an elongation at break of 30-110% and a tensile strength of 15-50 N/mm², more in particular such that the laminate presents an elongation at break between 50 and 40% and a tensile strength of 15-25 N/mm².

Polyester resins that set to form flexible products are known, for example from EP-A-31.977. These polyesters are generally composed of dicarboxylic acids and diols and have a fairly low degree of unsaturation. This is usually obtained by using a relatively low percentage (5-20%) of $\alpha,\beta$-unsaturated diacid, but can also be obtained by using polyalkylene diols and polyether diols. In addition, by adapting the monomers a large range of properties can be obtained of which chemical resistance, resistance to hydrolysis and temperature resistance are the most important. The unsaturated polyester may also be modified with, for example, isocyanates.

In addition to the dihydroxy compounds, up to 20 mole% of a higher-functional polyol may, for example, be used, because then a higher molecular weight is obtained more rapidly. It may also be effective to compensate the average functionality, for example by including the same molar amount of monohydroxy compound. Aliphatic alcohols, cycloaliphatic alcohols and aromatic alcohols with between 2 and 20, preferably between 2 and 10, carbon atoms may be used. Highly suitable examples are: ethylene glycol, propylene glycol-1,2, propylene glycol-1,3, diethylene glycol, triethylene glycol, dipropylene glycol, neopentyl glycol, 1,4-cyclohexanedimethanol, 1,6-hexanediol, 1,5-pentanediol, 1,4-butanediol, 1,3-butanediol, 1,2-butanediol, pinacol, tetraethylene glycol, 2,2-bis[4-2-hydroxypropoxy-phenyl]propane and other addition products of bisphenol A with several molecules of propylene oxide or ethylene oxide, neopentyl glycol mono-ester of hydroxypivalic acid, 2,2,4-trimethylpentanediol-1,3, 3-methylpentanediol, tris(hydroxyethyl)isocyanurate, trimethylolpropane, trimethylolethane, glycerol, polypropylene oxide, polyethylene oxide, $\alpha,\omega$-polyethylenediol, $\alpha,\omega$-polypropylenediol, $\alpha,\omega$-polybutenediol. The last five polymers preferably have an average molecular weight of between 200 and 5000, more in particular between 500 and 2000.

As dicarboxylic acid an $\alpha,\beta$-unsaturated acid is used in amount of 1-40 wt% of the acid component, preferably 5-15%. Maleic acid, fumaric acid, mesaconic acid, citraconic acid and itaconic acid are, for example, used as $\alpha,\beta$-unsaturated acid.

Suitable other dicarboxylic acids are preferably aliphatic, aromatic or cycloaliphatic dicarboxylic acids containing 4-36 carbon atoms. Preferably, the dicarboxylic acid contains between 6 and 10 carbon atoms. Examples of acids that may be used are: succinic acid, adipic acid, azelaic acid, sebacic acid, dimeric fatty acids, isophthalic acid, terephthalic acid, phthalic acid, tetrahydrophthalic acid, hexahydrophthalic acid, endomethylenetetrahydrophthalic acid, hexachloroendomethylenetetrahydrophthalic acid, dimethylterephthalate and itaconic acid. Mono-, tri- or higher-functional carboxylic acids may also be used, to a maximum of 20%, for instance trimellitic acid, 1,2,3,4-butanetetracarboxylic acid, 1,2,4,5-benzenetetracarboxylic acid or 1,4,5,8-naphthalenetetracarboxylic acid with the higher functionality often being compensated with monocarboxylic acid.

Dicyclopentadienyl units and/or cyclopentadienyl units may also be incorporated. In addition,

2

dicyclopentadiene may be incorporated, for example by causing it to react with alkenedicarboxylic acid.

The unsaturated polyesters can be prepared by causing the starting materials given above or their functional derivatives, such as acid anhydrides, lower alkyl esters, etc, to react with one another.

Preferably, the unsaturated polyester is prepared in two steps, in which an excess of glycol component is esterified with a dicarboxylic acid component in the first step and, in the second step, is quickly esterified with 1,2-alkenedicarboxylic acid, with 1-12 mole% of the dicarboxylic acid component of the first step consisting of or being isomerized to trans-1,2-alkenedicarboxylic acid and the rapid esterification in the second step being effected with alkenedicarboxylic acid or a derivative thereof, in which step the amount of this acid or derivative is chosen such that it amounts to 1-30 mole% of the total amount of dicarboxylic acid. In practice, the first step is often carried out at a reaction temperature of 190-220¤C with an acid number of at most 10 and an OH number of 15-60, after which a further reaction with cis-l,2-alkenedicarboxylic anhydride takes place in a second step at a temperature of 110¤-170¤C in 0.5-4 hours. At this lower reaction temperature ester exchange reactions are avoided. It is effective to carry out this esterification in an inert atmosphere and to discharge the reaction water, for example azeotropically. Once the unsaturated polyester has been obtained, it is cooled and usually diluted with preferably between 15 and 70 wt% of one or more vinyl compounds such as styrene, vinyl toluene, t-butylstyrene, divinyl benzene, alkylacrylates, alkylmethacrylates, chlorostyrene, bromostyrene, vinyl acetate, vinyl propionate, vinyl pivalate, allylphthalate, diallylphthalate, triallylcyanurate, triallylisocyanurate, 1,3-butanediol methacrylate, 1,4-butanediol dimethacrylate and alkylvinyl ethers. Preferably a vinylaromatic compound is used.

If necessary, polymerization inhibitors may be added, for example hydroquinone, p-benzoquinone, chloranil, 2,3-dichloro-5,6 dicyano-p-benzoquinone, p-tert-butyl-catechol, 2-tert-butyl-1,4-hydroquinone, 2,5-ditert-butyl-1,3-hydroquinone, copper naphthenate, 1,4-naphthoquinone, hydroquinone monomethylether and hydroquinone monoethyl ether.

According to the invention, a knitted fabric is used as reinforcing fibre material. In principle this knitted fabric may be prodcued from various types of fibres, such as plastic fibres like polyesters, polyethylene, polyacrylates, polyamides, polyacrylonitrile, polycarbonates etc., natural fibres such as sisal, jute and hemp and inorganic fibres such as glass fibres.

In addition, the laminate may contain other common fillers, pigments, etc.

The unsaturated polyester is cured by means of radical polymerization, initiated with the aid of known peroxide catalysts and/or catalysts that are sensitive to light.

The invention also relates to a prepreg in sheet form comprising a resin mixture of an unsaturated polyester and a monomer containing a vinyl group, common additives and reinforcing fibres, the resin mixture being in a B stage, characterized in that a resin mixture is used which, in set condition and without reinforcement, has a tensile strength of 5-12 $N/mm^2$ at an elongation at break of 90-400 % and that a knitted fibre fabric is used as reinforcing fibre. Such a prepreg may also comprise two films between which a mixture of polyester resin and monomers, reinforced with a knitted fabric, and, in addition, any common additives has been applied. Preferably the polyester resin is brought into a B stage, with magnesium oxide being used as thickening agent. Such a prepreg may be produced in the same manner as 'sheet-moulding compounds' and can also be processed in the same manner. It is particularly advantageous to use a prepreg provided with black plastic films in which a system sensitive to visible light is used as initiator system. These prepregs can be used advantageously in outdoor applications.

The laminates according to the invention can also be used with particular advantage in combination with rigid laminates. These compound laminates consist, for example, of a system of two layers, in which a flexible laminate may serve as top layer; this flexible layer appears to be remarkably wear-resistant. It is also possible to produce, for example, a system of three layers, in which a flexible layer is only partly covered on either side by a rigid laminate. The product then has a hard part with excellent shape-retaining properties and a flexible part, which may serve as hinge.

The laminates according to the invention are extremely suitable as lining films for groundwater basins that must remain flexible because the pressure changes, flashings in building, lining material for drainage canals, hinged parts, etc.

The invention will be elucidated with the following examples, without being limited thereto.

Examples I-VIII

Polyester resin X

1102 g (10.60 mol) of neopentyl glycol, 708 g (4.85 mol) of adipic acid and 35 g (0.30 mol) of fumaric acid were introduced, at room temperature, into a glass reaction vessel with a volume of 3 litres, equipped with a stirrer, a thermometer, a Vigreux column, a cooler and a nitrogen supply. This mixture was then heated to 100¤C and another 708 g (4.85 mol) of adipic acid was added. This mixture was esterified at 215¤C, with distillation of water, until an acid number of 5.4 was obtained. The viscosity of a mixture consisting of 60 parts of this polyester, mixed with 40 parts of styrene, was then 0.80 Pa.s (determined with an Emila viscometer at 20¤C). The polyester was then cooled to 150¤C and 78.4 g (0.80 mol) of maleic anhydride was added. After having been maintained at 150¤C for 2 hours, the mixture was cooled to 100¤C. Once this temperature had been reached, 1340 g of styrene and 134 mg of hydroquinone were added. The mixture thus obtained had an acid number of 14.7 and a hydroxyl number of 6.3 and contained 56.5 % solids and was set at a viscosity (Emila 20¤C) of 0.76 Pa.s. The gelling time of the polyester resin at 20¤C with 3% benzoyl peroxide (50%) and 0.3% of N,N-dimethyl-p-toluidine was 14.3 minutes.

Polyester resin was cured for 48 hours at 20¤C with 3% BPO (50%) and 0.3% of N,N-dimethyl-p-toluidine, after which the following properties were determined:
tensile strength (DIN 53455): 7 N/mm$^2$
elongation at break (DIN 53455): 250%

Laminates

With resin X and knitted polyester fabric (polybuteneterephthalate) the following 1-4 mm thick laminates were produced. The properties are given in Table 1.

### T A B L E  1

| Ex. | Woven fabric g/m$^2$ | Number of layers | Tensile strength N/mm$^2$ | Elongation at break % |
|-----|---------------|------------------|-------------------|-------------------|
| I | 35 | 4 | 22.7 | 59 |
| II | 90 | 1 | 19.8 | 71 |
| III | 90 | 4 | 22.4 | 67 |
| IV | 65 | 1 | 17.3 | 69 |
| V | 65 | 4 | 21.1 | 73 |
| VI | 90-95 | 1 | 15.0 | 76 |
| VII | 90-95 | 4 | 20.5 | 84 |

Resin Y:

a polyester resin that became rigid when cured was prepared with maleic anhydride. The tensile strength without reinforcement was 77 N/mm$^2$ at an elongation at break of 2.5%.

Comparative experiments A-E and example VIII

In the same way as in examples I-VII, laminates were produced from polyester resins X and Y, with a normally woven fabric and with a knitted fabric. The properties are given in Table 2.

T A B L E   2

| Ex. | Resin | Reinforce-ment | Number of layers | Tensile strength N/mm$^2$ | Elongation at break % |
|---|---|---|---|---|---|
| A | X | Terlenka 125 g/m$^2$ | 1 | 106 | 16.3 |
| B | X | Terlenka 125 g/m$^2$ | 4 | 93 | 15.7 |
| C | X | Terlenka 200 g/m$^2$ | 1 | 109 | 15 |
| VIII | X | Knitted fabric 90-95 g/m$^2$ | 1 | 16 | 79 |
| D | Y | Terlenka 200 g/m$^2$ | 1 | 117 | 17 |
| E | Y | Knitted fabric 90-95 g/m$^2$ | 1 | 15 | 2.5 |

From this it is clear that a higher elongation at break can be realized without impairing the tensile strength.

Example IX

A sheet compound thickened with MgO paste was made between two sheets of black polyethylene film, using resin X and a knitted fabric based on polyester fibres. 2% benzil, 1% N,N,N',N'-tetramethyldiaminoethane and 1% carbon tetrachloride were added to the resin as initiator mixture capable of initiating polymerization under the influence of visible light.

After the sheet had been applied to a roof, the black film was removed. After a few hours of sunlight the laminate had set.

**Claims**

1. Laminate based on a cured resin mixture consisting of an unsaturated polyester and a monomer containing a vinyl group and reinforcing fibres in the form of a knitted fibre fabric, characterized in that, a resin mixture is applied, that in set condition, without reinforcement has a tensile strength of 5-12 N/mm$^2$ at an elongation at break of 90-400%.

2. Laminate according to claim 1, characterized in that the resin mixture and the fibre reinforcement are chosen such that the laminate has a tensile strength of 15-90 N/mm$^2$ and an elongation at break of 20-120%.

3. Laminate according to claim 1 or 2, characterized in that the resin mixture and the fibre reinforcement are chosen such that the laminate has a tensile strength of 15-25 N/mm$^2$ and an elongation at break of 50-110%.

4. Laminate according to any one of claims 1-3, characterized in that the knitted fabric is made from polyester and/or acrylate fibre.

5. Prepreg in sheet-form comprising a resin mixture of an unsaturated polyester and a monomer containing a vinyl group, additives and reinforcing fibres, with the resin mixture being in a B stage, characterized in that a resin mixture is applied, that, in set condition and without reinforcement has a tensile strength of 5-12 $N/mm^2$ at an elongation at break of 90-400% and that a knitted fibre fabric is used as reinforcing fibre.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 89, no. 16, 16th October 1978, page 36, no. 130415n, Columbus, Ohio, US; & JP-A-78 31 775 (SHOWA HIGHPOLYMER CO., LTD) 25-03-1978 ----- | | C 08 J 5/24 C 08 L 67/06 |

TECHNICAL FIELDS SEARCHED (Int. Cl.4)

C 08 J
C 08 L

The present search report has been drawn up for all claims

| Place of search | Date of completion of the search | Examiner |
|---|---|---|
| THE HAGUE | 27-07-1988 | MEULEMANS R.A.M.G.G. |